# EUROPEAN PATENT SPECIFICATION

(11) **EP 3 316 067 B1**
(45) Date of publication and mention of the grant of the patent: **09.09.2020**
(21) Application number: 17198803.3
(22) Date of filing: 27.10.2017
(51) Int. Cl.: G05D 1/02

(54) **CONTACT SENSOR FOR UTILITY ROBOTIC VEHICLE**
KONTAKTGEBER FÜR ROBOTER
DÉTECTEUR DE CONTACT POUR VÉHICULE ROBOTIQUE

(30) Priority: 31.10.2016 JP 2016213426
(43) Date of publication of application: 02.05.2018
(73) Proprietor: HONDA MOTOR CO., LTD., Tokyo 107-8556 (JP)
(72) Inventor: MATSUMOTO, Takuya, Wako-shi, Saitama 351-0193 (JP)
(74) Representative: Weickmann & Weickmann PartmbB

(56) References cited:
- WO-A1-02/39868
- GB-A- 2 494 442
- JP-A- H08 263 137

## Description

This invention relates to a utility vehicle, particularly to a utility vehicle equipped with a contact sensor for detecting contact with obstacles.

A utility vehicle of this type is equipped with a contact sensor for detecting contact with obstacles by sensing displacement between a cover displaceably attached to a chassis and the chassis, and the applicant also previously proposed a contact sensor of this type in International Patent Publication No. WO 2017/109879 A1.

The sensor described in the reference comprises three shafts that lie parallel to gravity axis direction at spaced positions of a chassis and are attached to a cover (retaining shafts), a magnetic body (permanent magnet) accommodating bases of the shafts, and a magnetic sensor installed at a position apart from the magnetic body by a predetermined distance.

In addition, guides constituted by multiple disks are provided near the middles of the respective shafts, and the shafts are passed through through-holes formed in the disks to restrict movement to horizontal direction.

The utility vehicle contact sensor of the reference is disadvantageous because the provision of the three shafts increases the number of component parts and because the structure is made complicated by the need for guides for restricting movement to horizontal direction.

In GB 2 494 442 A, on which the preamble of claim 1 is based, a relative sliding movement is separately detected both at the front end and rear end body. At the front end, there are provided a centrally located opening at the platform and a slidable pivoting member in the form of gudgeon pin receivable in the opening. The rear end is provided with a sleeve-like tubular supporting member and a dished recess on a plate member that extends in a direction parallel with a width direction which is perpendicular to the longitudinal line of the chassis.

In WO 02/39868 A1, a robot device has an upper plate and a lower plate, wherein the upper plate is formed with an aperture whose periphery is surrounded by conducting segments, whereas the lower plate is provided with a contact member that passes through the aperture beyond the upper plate. The upper plate is disc-shaped so that the plate does not extend in a specific direction like the longitude line of the chassis.

Therefore, an object of this invention is to provide a utility vehicle equipped with a contact sensor to detect contact with an obstacle from displacement between a chassis and a cover, in which the number of constituent components is reduced to enable a simple structure.

In order to achieve the object, this invention provides a utility vehicle according to claim 1.

The utility vehicle is equipped with driving wheels attached to a chassis to run about a working area, the vehicle having a contact sensor configured to detect contact with an obstacle from displacement between the chassis and a cover attached to the chassis. The contact sensor comprises: a plate that is attached to the cover and disposed in a space between the chassis and the cover and extends horizontally, the plate being attached to the chassis with elastic members; a detection element that is disposed between the plate and the chassis and generates an output indicating the displacement between the plate and the chassis; and a detector connected to the detection element to detect the contact with the obstacle based on the outputs of the detection element, whereby the elastic members comprise wires that loosely connect the plate to the chassis.
FIG. 1 is a conceptual diagram showing an overview of a utility vehicle according to an embodiment of this invention:
FIG. 2 is a top view of the utility vehicle of FIG. 1:
FIG. 3 is a diagram for explaining, inter alia, a working area of the utility vehicle of FIG. 1:
FIG. 4 is a plan view of a chassis and a plate of the utility vehicle of FIG. 1:
FIG. 5 is a side view of the chassis and plate of the utility vehicle of FIG. 1:
FIG. 6 is an explanatory diagram schematically illustrating the chassis and plate of FIG. 4:
FIG. 7 is also an explanatory diagram schematically illustrating the chassis and plate of FIG. 4: and
FIG. 8 is also an explanatory diagram schematically illustrating the chassis and plate of FIG. 4.

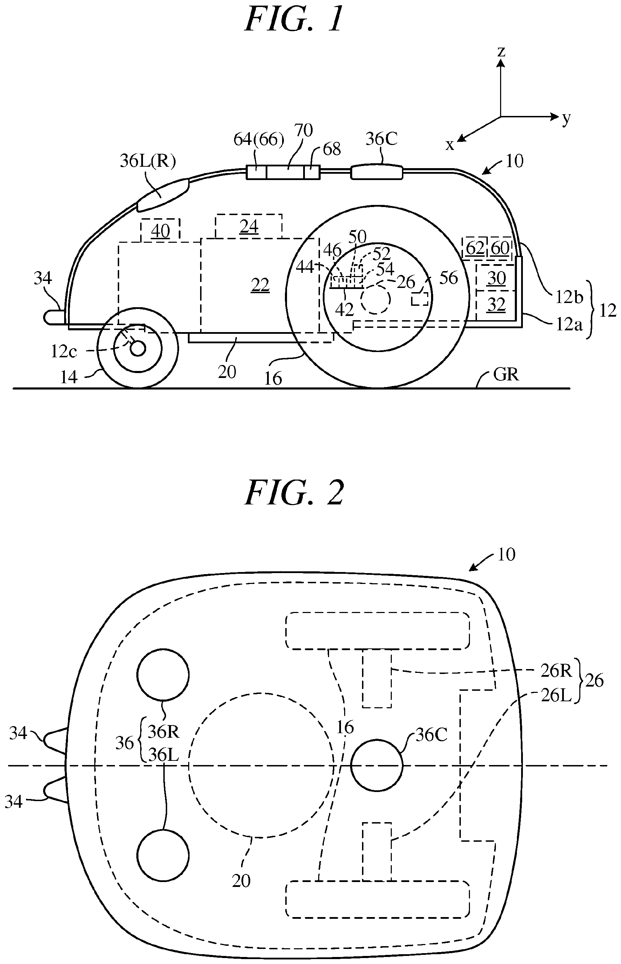

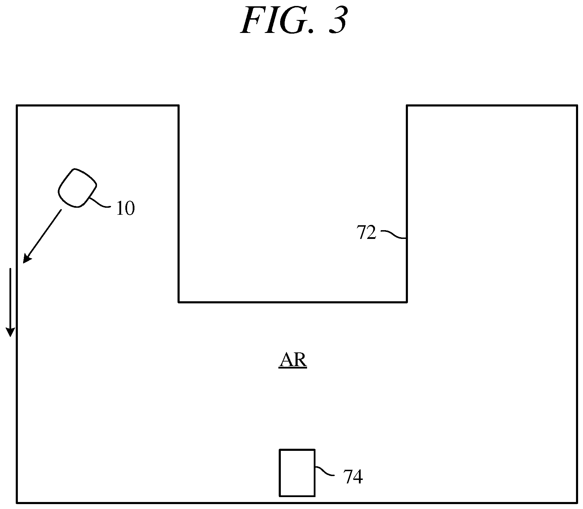

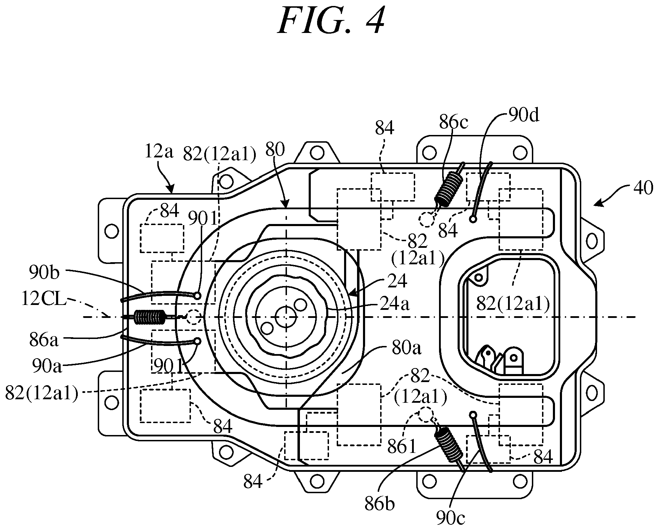

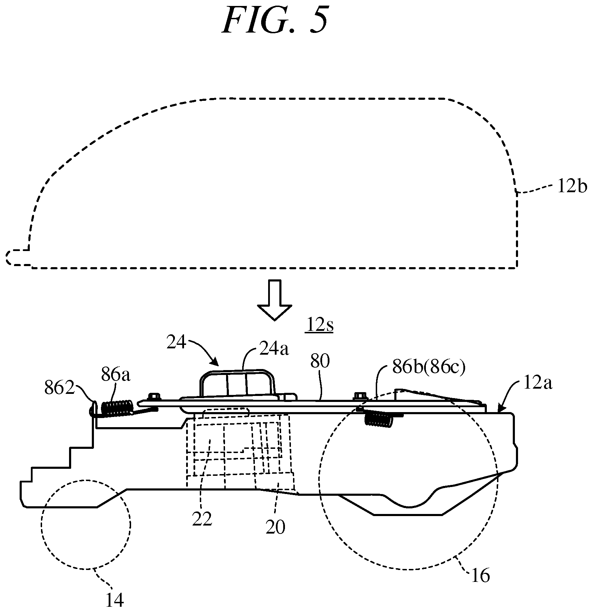

FIG. 1 is a conceptual diagram showing an overview of a utility vehicle according to an embodiment of this invention; FIG. 2 is a top view of the utility vehicle of FIG. 1; FIG. 3 is a plan view of a working area in which the utility vehicle of FIG. 1 runs; FIG. 4 is a plan view of a chassis and a plate of the utility vehicle; and FIG. 5 is a side view thereof.

Symbol 10 in FIG. 1 and other drawings designates a utility vehicle (hereinafter called "vehicle"). The vehicle 10 is actually implemented as a lawnmower. A body 12 of the vehicle 10 comprises a chassis (body frame) 12a and a cover 12b displaceably attached to the chassis 12a.

The vehicle 10 is equipped with two front wheels 14 of relatively small diameter fixed by stays 12c to left and right sides of the chassis 12a toward its front end in the forward-rearward direction, and with left and right rear wheels 16 of relatively large diameter directly attached to the chassis 12a toward its rear end.

A blade 20 (work unit, specifically a rotary blade) for lawn mowing work is attached near the middle of the chassis 12a of the vehicle 10, and an electric motor (prime mover; hereinafter called "work motor") 22 is installed above it. The blade 20 is connected to the work motor 22 and driven to rotate by the work motor 22.

A blade height regulation mechanism 24 manually operable by a user (operator) is connected to the blade 20. The blade height regulation mechanism 24 is equipped with a handle 24a (shown in FIGs. 4 and 5) operable by the user, and the user can regulate height of the blade 20 above ground surface GR by manually rotating the handle 24a.

Two electric motors (prime movers; hereinafter called "driving motors") 26L and 26R are attached to the chassis 12a of the vehicle 10 rearward of the blade 20. The driving motors 26L and 26R are connected to the left and right rear wheels 16 to be rotated normally (rotate to move forward) or reversely (rotate to move backward) independently on the left and right, with the front wheels 14 as non-driven wheels and the rear wheels 16 as driven wheels. The blade 20, work motor 22, driving motors 26 and so on are covered by the cover 12b.

In this embodiment, the vehicle 10 is of such weight and size as to be portable by the user. For example, the vehicle 10 has a total length (forward-rearward direction length) of about 71 cm, total width about 55 cm, and height about 30 cm.

An onboard charging unit 30 and an onboard battery 32 connected thereto are housed at the rear of the utility vehicle 10, and a pair of battery charging terminals 34 are attached to the chassis 12a so as to project forward from a front end position. The battery charging terminals 34 are connected to the onboard charging unit 30. The work motor 22 and driving motors 26 are connected to the onboard battery 32 and are powered by the onboard battery 32.

Left and right magnetic sensors 36L and 36R are installed toward the front end of the body 12 of the vehicle 10 and a single magnetic sensor 36C is installed toward the rear end. The magnetic sensors 36 generates outputs indicating magnetic field strength.

A contact sensor 40 is attached to the body 12 to detect displacement between the cover 12b and the chassis 12a caused by contact of the vehicle 10 with an obstacle or foreign object. The contact sensor 40 is explained in detail below.

A housing box installed near the middle of the chassis 12a houses a printed circuit board 42 carrying an electronic control unit (hereinafter called "ECU") 44, which comprises a computer equipped with a processor (CPU), I/O, memory (ROM, EEPROM and RAM) and other components.

The printed circuit board 42 is provided thereon, in the vicinity of the ECU 44, with an angular velocity sensor 46 that generates an output indicating angular velocity (yaw rate) around a center-of-gravity z-axis (gravity axis) of the vehicle 10, an acceleration sensor 50 that generates an output indicating acceleration acting on the vehicle 10 in orthogonal three-axis (x, y and z) directions, an orientation sensor 52 that generates an output indicating absolute orientation (direction) in response to terrestrial magnetism, and a GPS sensor 54 that receives radio waves from GPS satellites and generates an output indicting current position of the vehicle 10.

Wheel speed sensors 56 installed near the left and right rear wheels 16 of the vehicle 10 generate outputs indicating wheel speeds of the left and right rear wheels 16, and a lift sensor 60 installed between the chassis 12a and the cover 12b detects lifting of the cover 12b off the chassis 12a, by the user, for example. A current sensor 62 installed on the onboard battery 32 generates an output indicating consumption of onboard battery 32 current.

The vehicle 10 is equipped with a main switch 64 for instructing start of work operation and an emergency stop switch 66 for instructing emergency stop, both of which are operable by the user. In addition, the top of the cover 12b has a large cutaway in which a keyboard, touch panel or other input device 68 is installed for input of instructions and the like by the user, and a display 70 is installed near the input device 68. The input device 68 and the display 70 are connected to the ECU 44, and the display 70 displays working modes and other various information in accordance with commands sent from the ECU 44.

The outputs of the magnetic sensors 36, contact sensor 40, angular velocity sensor 46 and other sensors, and the outputs of the main switch 64 and other switches are sent to the ECU 44. Based on these outputs, the ECU 44 applies power from the onboard battery 32 to the driving motors 26 and outputs control values to control navigation of the vehicle 10 by controlling operation of the driving motors 26.

The ECU 44 detects (recognizes) a working area AR from the outputs of the magnetic sensors 36 and accordingly applies power to the work motor 22 so as to service the working area AR.

As shown in FIG. 3, the working area AR is delineated by a boundary wire (electrical wire) 72 laid around its periphery (boundary). A charging station 74 for charging the onboard battery 32 of the vehicle 10 is installed in the working area AR. (In FIG. 3, sizes of the vehicle 10 and so on are exaggerated). The vehicle 10 is exemplified as a utility vehicle that runs, more specifically autonomously runs or navigates while detecting magnetic field of the boundary wire 72 laid around the working area AR.

As a characterizing feature of this invention resides in the structure of the contact sensor 40 of the vehicle 10 configured as set out above, this structure is explained with reference to FIG. 4 and ensuing drawings in the following.

FIG. 4 is a plan view of the chassis 12a of the vehicle 10 shown in FIG. 1, and FIG. 5 is a side view thereof.

As shown, a plate 80 is provided above the chassis 12a in the gravity axis direction. The plate 80 is attached to the cover 12b by detachable locking members (not shown). As viewed from the side, the plate 80 is constituted by at least one flat plate disposed in a space 12s formed between the cover 12b and the chassis 12a to extend horizontally, more specifically orthogonal to gravity axis direction.

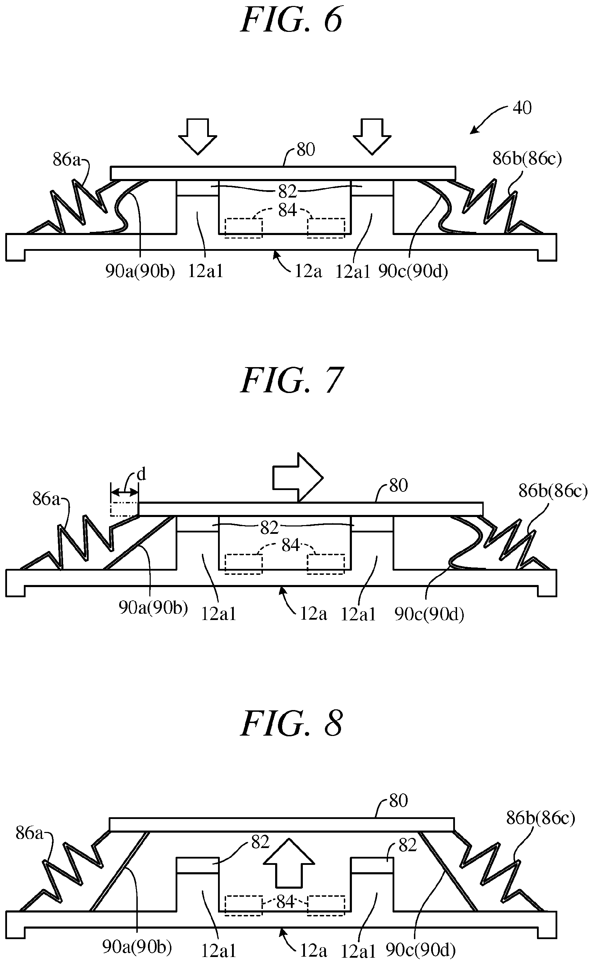

FIGs. 6 to 8 are explanatory diagrams schematically illustrating the plate 80 and chassis 12a.

As termed in this specification, "gravity axis direction" means direction of gravity axis (vertical axis direction; z-axis direction) in an orthogonal coordinate system when, as shown in FIG. 1, the vehicle 10 with attached contact sensor 40 is resting on ground surface GR.

As seen in FIG. 4, the plate 80 exhibits the shape of a semicircular section and a rectangular section integrally joined, with much of the semicircular section center region being cut away to form a hole 80a that allows the handle 24a of the blade height regulation mechanism 24 to project through. The plate 80 is made of iron or other magnetic material. The chassis 12a and cover 12b are made of synthetic resin material. Alternatively, the plate 80 can be made of resin material with embedded magnetic material.

As seen in FIGs. 6 to 8, the chassis 12a is disposed with projections 12a1 at locations spaced apart each other. More specifically, as seen in FIG. 3, the projections 12a1 (specifically six) are disposed at locations around the periphery of the plate 80.

A detection element 82, specifically a plurality (more specifically six) of detection elements 82 are disposed between the plate 80 and the chassis 12a at positons spaced apart from each other, more exactly, as shown in FIG. 6 to 8, the detection elements 82 are disposed on the projections 12alof the chassis 12a that faces the plate 80, and a plurality (specifically six) of detectors 84 are provided on the chassis 12a to be electrically connected to each of the detection elements 82.

Specifically, as shown in FIG. 4, the multiple detection elements 82 are installed at positions spaced apart symmetrically relative to a longitudinal line 12CL of the body 12.

The detection elements 82 are electromagneto transducers, e.g., Hall effect elements, that generate outputs proportional to physical displacement between the plate 80 and the chassis 12a. The detectors 84 detect presence / absence of contact with buildings, paving stones, animals, people and other obstacles based on outputs of the detection elements 82 indicating the physical displacement.

More specifically, the outputs of the detection elements 82 are A/D converted from analog values to digital values by the detectors 84 and the A/D-converted values are sent to the ECU 44, which compares change per unit time with a threshold value and determines that contact or the like with an obstacle occurred and outputs an ON signal when the threshold value is exceeded. The detection will again be explained below.

The plate 80 is attached to the chassis 12a through a plurality (specifically three) of coil springs (elastic members) 86. And the plate 80 attached to the chassis 12a via the coil springs 86 is urged toward the chassis 12a by the coil springs 86.

The multiple coil springs 86 are disposed at spaced positions around the perimeter of the plate 80, specifically at multiple laterally symmetrical positions relative to the longitudinal line 12CL of the body 12, and still more specifically a total of three are disposed in the gravity axis direction, namely one coil spring 86a on the longitudinal line 12CL nearly over the front wheels 14 and two springs 86b and 86c nearly over the rear wheels 16.

One end of each coil spring 86 is fastened to the plate 80 through a fastener 861 and another end thereof is fastened to the chassis 12a through a hook 862 (shown in FIG. 5).

Further, a plurality (specifically four) of wires (elastic members) 90 exhibiting flexibility to be bendable / stretchable are disposed near the three coil springs 86 to loosely connect the plate 80 to the chassis 12a.

The four wires 90 are disposed at spaced positions around the perimeter of the plate 80, at multiple laterally symmetrical positions relative to the longitudinal line 12CL of the body 12, and more specifically a total of four are disposed, namely two wires 90a and 90b on left and right of the coil spring 86 on the front wheel 14 side and two wirers 90c and 90d near the coil springs 86b and 86c on the rear wheel 16 side.

Although not illustrated in detail in the drawings, one end of each wire 90 is fastened to the plate 80 through a fastener 901 and another end thereof is fastened to the chassis 12a through a hook (not shown).

There now follows an explanation with reference to FIGs. 6 to 8 of detection operation of the contact sensor 40 of the vehicle 10. The vehicle 10 is assumed to advance leftward in FIGs. 6 to 8.

As shown in FIG. 6, when the vehicle 10 is driving, the plate 80 is constantly pressed (urged) toward the chassis 12a, in particular toward the detection elements 82 mounted thereon, by the force of the coil springs 86. In this situation, the wires 90a, 90b, 90c and 90d are in bent condition.

Now suppose that the cover 12b is displaced by the vehicle 10 having struck an obstacle, thereby producing a force that acts to displace the plate 80 rearward by distance d, as indicated by imaginary lines in FIG. 7. Thereupon the detection elements 82 of the contact sensor 40 generate outputs proportional to physical displacement between the plate 80 and chassis 12a, whereupon the detectors 84 (and ECU 44) detect (determine) occurrence of contact with the obstacle and output an ON signal when the detected force exceeds the threshold value (not shown).

At this time, as shown in FIG. 7, the wires 90a and 90b on the front wheel 14 side extend and the wirers 90c and 90d on the rear wheels 16 side bend, so that the plate 80 displaces to the limit length of the wirers 90c and 90d (by distance d).

When the cover 12b is lifted off the chassis 12a, typically by the user, either when the vehicle 10 is moving or when stopped, both the wires 90a and 90b on the front wheels 14 side and the wirers 90c and 90d on the rear wheels 16 side extend, as seen in FIG. 8, so that displacement of the cover 12b (and plate 80) from the chassis 12a is restricted to within the extension limit of the wires 90.

In such a case, since the physical displacement between the plate 80 and the chassis 12a is gravity axis direction displacement, the lifting of the cover 12b is detected (determined) not by the contact sensor 40 but instead by the lift sensor 60 (and ECU 44).

As set out in the foregoing, the embodiment is configured to have a utility vehicle (10) equipped with driving wheels (16) attached to a chassis (12a) to run about a working area (AR), the vehicle having a contact sensor (40) configured to detect contact with an obstacle from displacement between the chassis (12a) and a cover (12b) (displaceably) attached to the chassis (12a), characterized in that the contact sensor (40) comprises: a plate (80) that is attached to the cover (12b) and disposed in a space formed between the chassis (12a) and the cover (12b) and extends horizontally, more specifically in a direction orthogonal to gravity axis direction, the plate (80) being attached to the chassis (12a) with elastic members (86); a detection element (82) that is disposed between the plate (80) and the chassis (12a) and generates an output indicating (proportional to) the displacement between the plate (80) and the chassis (12a); and a detector (84) connected to the detection element (82) to detect the contact with the obstacle based on the outputs of the detection element (82).

With this, since a configuration is adopted that comprises the at least one plate 80, rather than three shafts and guides, between the cover 12b and the chassis 12a, the number of constituent components can be reduced to enable a simple structure.

In other words, the plate 80 extending orthogonal to gravity axis direction is installed instead of shafts, and the detection elements 82 are provided between the plate 80 and the chassis 12a to generate outputs indicating displacement between the two, which configuration makes guides for restricting movement of the plate 80 in horizontal direction unnecessary, thereby enabling structural simplification.

In addition, a configuration is adopted whereby the plate 80 is attached to the chassis 12a with the elastic members (coil springs) 86, thereby inhibiting vibration of the cover 12b when the vehicle 10 is driving.

Further, in the vehicle, the detection element (82) comprises a plurality of detection elements (82) that are disposed between the plate (80) and the chassis (12a) at positions spaced apart from each other.

Specifically, the chassis (12a) is disposed with a projection (12a1) and the detection element (82) is disposed on the projection (12a1).

More specifically, the chassis (12a) is disposed with projections (12a1) and the detection elements (82) are disposed on the projections (12a1) at positions spaced part with each other.

With this, in addition to the aforesaid effects and advantages, accuracy of detecting contact with obstacles can be enhanced.

Moreover, in the vehicle, the elastic members (86) are coil springs (86) that are disposed around perimeter of the plate and urges the plate (80) toward the chassis (12a). With this, in addition to the aforesaid effects and advantages, the plate 80 and chassis 12a can be maintained at desired positions in an initial state free of external force, thereby enabling improved obstacle detection accuracy.

Further, in the vehicle, the elastic members (86) comprise wires (90) that loosely connect the plate (80) to the chassis (12a).

Specifically, the wires (90) are disposed at locations near to the coil springs (86).

More specifically, the plate (80) is cut away to form a hole (80a) that allows a blade height regulation mechanism (24) that adjust height of a blade (20) to project therethrough, and the coil springs (86) are disposed around the perimeter of the hole (80a) of the plate.

With this, in addition to the aforesaid effects and advantages, displacement limit of the plate 80 can be reliably restricted. Specifically, the fact that the wires 90 extend under action of external force ensures that horizontal and/or vertical movement of the plate 80 (i.e., movement range of the cover 12b) is restricted to within extension limit of the wires 90, whereby damage to other elastic members and/or components by large displacement of the body 12 and plate 80 can be prevented.

Although in the foregoing the vehicle 10 is exemplified as a utility vehicle that runs, more specifically autonomously runs or navigates while detecting magnetic field of the boundary wire 72 laid around the working area AR, the vehicle 10 is not limited to this type of utility vehicle.

Moreover, although the vehicle 10 was described as a lawn-mowing vehicle, this invention is not limited to such an application and can also be applied to other utility vehicles capable of driving.

Further, although electromagneto transducers, e.g., Hall effect elements, are used as the detection elements 82 in the foregoing description, this is not a restriction and the detection elements 82 can be of any type insofar as capable of generating outputs proportional to physical displacement between the plate 80 and chassis 12a. Also, it is alternatively possible to move the detection elements 82 to suitable positions on the chassis 12a and dispose resin-based elastic members where the detection elements 82 were located.

Further, the plate 80 was described as constituted of a single member, but it can instead be constituted as one comprising two or more plates.

Moreover, in the foregoing description, the elastic members for attaching the plate 80 to the chassis 12a are constituted by the coil springs 86 and the wires 90, but the elastic members are not limited to these types and can be of any type insofar as capable of urging the plate 80 toward the chassis 12a and preventing displacement of the plate 80 beyond a displacement limit.

## Claims

1. A utility vehicle (10) equipped with driving wheels (16) attached to a chassis (12a) to run about a working area (AR), the vehicle having a contact sensor (40) configured to detect contact with an obstacle from displacement between the chassis (12a) and a cover (12b) attached to the chassis (12a),
wherein the contact sensor (40) comprises:
a plate (80) that is attached to the cover (12b) and disposed in a space formed between the chassis (12a) and the cover (12b) and extends horizontally, the plate (80) being attached to the chassis (12a) with elastic members (86);
a detection element (82) that is disposed between the plate (80) and the chassis (12a) and generates an output indicating the displacement between the plate (80) and the chassis (12a); and
a detector (84) connected to the detection element (82) to detect the contact with the obstacle based on the outputs of the detection element (82),
**characterized in that** the elastic members (86) comprise wires (90) that loosely connect the plate (80) to the chassis (12a).

2. The vehicle according to claim 1, wherein the detection element (82) comprises a plurality of detection elements (82) that are disposed between the plate (80) and the chassis (12a) at positions spaced apart from each other.

3. The vehicle according to claim 1 or 2, wherein the elastic members (86) are coil springs (86) that are disposed around perimeter of the plate and urges the plate (80) toward the chassis (12a).

4. The vehicle according to claim 1, wherein the wires (90) are disposed at locations near to the coil springs (86).

5. The vehicle according to any of claim 1 to 4, wherein the chassis (12a) is disposed with a projection (12a1) and the detection element (82) is disposed on the projection (12a1).

6. The vehicle according to any of claims 2 to 4, wherein the chassis (12a) is disposed with projections (12a1) and the detection elements (82) are disposed on the projections (12a1) at positions spaced part with each other.

7. The vehicle according to any of claims 3 to 6, wherein the plate (80) is cut away to form a hole (80a) that allows a blade height regulation mechanism (24) that adjust height of a blade (20) to project therethrough, and the coil springs (86) are disposed around the perimeter of the hole (80a) of the plate.

## Patentansprüche

1. Nutzfahrzeug (10), das mit an einem Chassis (12a) angebrachten Antriebsrädern (16) ausgestattet ist, um in einem Arbeitsbereich (AR) umherzufahren, wobei das Fahrzeug einen Kontaktsensor (40) aufweist, der konfiguriert ist, um Kontakt mit einem Hindernis aus einer Verlagerung zwischen dem Chassis (12a) und einem an dem Chassis (12a) angebrachten Deckel (12b) zu detektieren,
wobei der Kontaktsensor (40) aufweist:
eine Platte (80), die an dem Deckel (12b) angebracht und in einem zwischen dem Chassis (12a) und dem Deckel (12b) ausgebildeten Raum angeordnet ist und sich horizontal erstreckt, wobei die Platte (80) an dem Chassis (12a) mit elastischen Elementen (86) angebracht ist;
ein Detektionselement (82), das zwischen der Platte (80) und dem Chassis (12a) angeordnet ist und eine Ausgabe erzeugt, welche die Verlagerung zwischen der Platte (80) und dem Chassis (12a) angibt; und
einen Detektor (84), der mit dem Detektionselement (82) verbunden ist, um den Kontakt mit dem Hindernis basierend auf den Ausgaben des Detektionselements (82) zu detektieren,
**dadurch gekennzeichnet, dass** die elastischen Elemente (86) Drähte (90) aufweisen, die die Platte (80) mit dem Chassis (12a) lose verbinden.

2. Das Fahrzeug nach Anspruch 1, wobei das Detektionselement (82) eine Mehrzahl von Detektionselementen (82) aufweist, die zwischen der Platte (80) und dem Chassis (12a) an Positionen mit Abstand voneinander angeordnet sind.

3. Das Fahrzeug nach Anspruch 1 oder 2, wobei die elastischen Elemente (86) Schraubenfedern (86) sind, die um den Umfang der Platte herum angeordnet sind und die Platte (80) zu dem Chassis (12a) hin vorspannen.

4. Das Fahrzeug nach Anspruch 1, wobei die Drähte (90) an den Schraubenfedern (86) benachbarten Orten angeordnet sind.

5. Das Fahrzeug nach einem der Ansprüche 1 bis 4, wobei das Chassis (12a) mit einem Vorsprung (12a1) versehen ist, und das Detektionselement (82) an dem Vorsprung (12a1) angeordnet ist.

6. Das Fahrzeug nach einem der Ansprüche 2 bis 4, wobei das Chassis (12a) mit Vorsprüngen (12a1) versehen ist und die Detektionselemente (82) an den Vorsprüngen (12a1) an Positionen mit Abstand voneinander angeordnet sind.

7. Das Fahrzeug nach einem der Ansprüche 3 bis 6, wobei die Platte (80) zur Bildung eines Lochs (80a) abgeschnitten ist, das einem Messerhöhen-Regelmechanismus (24), der eine Höhe eines Messers (20) einstellt, erlaubt, dort hindurch vorzustehen, und die Schraubenfedern (86) um den Umfang des Lochs (80a) der Platte herum angeordnet sind.

## Revendications

1. Véhicule utilitaire (10) équipé de roues motrices (16) attachées à un châssis (12a) pour tourner autour d'une zone de travail (AR), le véhicule ayant un capteur de contact (40) configuré pour détecter un contact avec un obstacle à partir d'un déplacement entre le châssis (12a) et une enveloppe (12b) attachée au châssis (12a),
dans lequel le capteur de contact (40) comprend :
une plaque (80) qui est attachée à l'enveloppe (12b) et disposée dans un espace formé entre le châssis (12a) et l'enveloppe (12b) et s'étend horizontalement, la plaque (80) étant attachée au châssis (12a) avec des organes élastiques (86) ;
un élément de détection (82) qui est disposé entre la plaque (80) et le châssis (12a) et génère une sortie indiquant le déplacement entre la plaque (80) et le châssis (12a) ; et
un détecteur (84) relié à l'élément de détection (82) pour détecter le contact avec l'obstacle sur la base des sorties de l'élément de détection (82),
**caractérisé en ce que** les organes élastiques (86) comprennent des fils (90) qui relient la plaque (80) au châssis (12a) de manière lâche.

2. Véhicule selon la revendication 1, dans lequel l'élément de détection (82) comprend une pluralité d'éléments de détection (82) qui sont disposés entre la plaque (80) et le châssis (12a) à des positions espacées l'une de l'autre.

3. Véhicule selon la revendication 1 ou 2, dans lequel les organes élastiques (86) sont des ressorts hélicoïdaux (86) qui sont disposés autour d'un périmètre de la plaque et poussent la plaque (80) vers le châssis (12a).

4. Véhicule selon la revendication 1, dans lequel les fils (90) sont disposés à des emplacements proches des ressorts hélicoïdaux (86).

5. Véhicule selon l'une quelconque des revendications 1 à 4, dans lequel le châssis (12a) est agencé avec une saillie (12a1) et l'élément de détection (82) est disposé sur la saillie (12a1).

6. Véhicule selon l'une quelconque des revendications 2 à 4, dans lequel le châssis (12a) est agencé avec des saillies (12a1) et les éléments de détection (82) sont disposés sur les saillies (12a1) à des positions espacées l'une de l'autre.

7. Véhicule selon l'une quelconque des revendications 3 à 6, dans lequel la plaque (80) est découpée pour former un trou (80a) qui permet à un mécanisme de régulation de hauteur de lame (24) qui ajuste une hauteur d'une lame (20) de faire saillie au travers, et les ressorts hélicoïdaux (86) sont disposés autour du périmètre du trou (80a) de la plaque.
